# EUROPÄISCHE PATENTSCHRIFT

(11) **EP 0 901 815 B1**
(45) Veröffentlichungstag und Bekanntmachung des Hinweises auf die Patenterteilung: **26.11.2003**
(21) Anmeldenummer: 98117211.7
(22) Anmeldetag: 09.09.1998
(51) Int. Cl.: B01J 35/02, B01J 23/80

(54) **Zn-Cu-Al Mischoxydkatalysator in Tablettenform**
Zn-Cu-Al mixed oxyde catalyst having the form of tablets
Pastilles de catalyseur à base d'oxyde mixte de Zn, Cu et Al

(30) Priorität: 10.09.1997 DE 19739746
(43) Veröffentlichungstag der Anmeldung: 17.03.1999
(73) Patentinhaber: BASF AKTIENGESELLSCHAFT, 67056 Ludwigshafen (DE)
(72) Erfinder: Kumberger, Otto Dr., Tsim Sha Tsui East, Knowloon, Hong Kong (CN); Hofstadt, Otto, 67122 Altrip (DE)
(74) Vertreter: Isenbruck, Günter

(56) Entgegenhaltungen:
- EP-A- 0 277 843
- US-A- 5 112 591
- US-A- 5 656 249

## Beschreibung

Die Erfindung betrifft Katalysatoren in Tablettenform.

Feste Katalysatoren können in technischen Verfahren in Form von Pulvern, Granulaten, Splitt oder Formkörpern eingesetzt werden. Dabei werden zur Formgebung drei Hauptverfahren angewendet: das Tablettieren, das Extrudieren und das Granulieren. Eine Übersicht über diese Verfahren ist in Catalyst Handbook, 2. Auflage, herausgegeben von Martyn V. Twigg, Wolfe Publishing Ltd., 1989, Seiten 44 bis 48, gegeben.

Extrudate weisen in der Regel lange unregelmäßige zylindrische Formen auf, wobei die Länge durch natürlich auftretende Brüche beschränkt ist (beispielsweise Strangpressen). Neben kreisförmigen Querschnitten können auch beispielsweise sternförmige Querschnitte erreicht werden, um die äußere Oberfläche zu vergrößern. Die Extrudate haben eine geringere Dichte als Tabletten. Geeignete Größen sind Durchmesser von etwa 1 mm oder größer. Es können auch Hohlstränge hergestellt werden.

Granulate (Körner) haben eine kugelförmige Gestalt. Sie sind weniger dicht als Tabletten und weisen einen Durchmesser von etwa 2 mm oder mehr auf.

Die Tabletten weisen in der Regel eine zylindrische Form auf, wobei übliche Größen im Bereich von 5 mm bis etwa 20 mm liegen. Es können sowohl Zylinder als auch Raschig-Ringe hergestellt werden, wobei andere Formgebungen beschränkt möglich sind. Oft werden zwei Kompaktierungsschritte bei der Formgebung benötigt. Die Tabletten sind dichter und fester als Extrudate oder Granulate.

Für die einzelnen Katalysatorformen sind geeignete Herstellungsverfahren und entsprechende Vorrichtungen bekannt. Im oben genannten Catalyst Handbook wird ausgeführt, daß kleinere Teilchen bevorzugt durch Granulieren oder Extrusion und nicht durch Tablettieren hergestellt werden. Die Wahl zwischen der Extrusion und Granulierung hängt danach hauptsächlich von der Art des Pulvervorläufers ab.

Für viele Katalysatoranwendungen, insbesondere in mobilen Systemen, kommt es auf eine hohe Packungsdichte des Katalysators im Katalysatorbett an, um eine kompakte Bauweise gewährleisten zu können. Insbesondere bei mobilen Anlagen zur Methanolreformierung, bei der aus Methanol und Wasserdampf Wasserstoff und Kohlendioxid erzeugt werden, die zum Betreiben von Brennstoffzellen notwendig sind, wird eine hohe Packungs- oder Schüttdichte des Reformierungskatalysators angestrebt. Als Katalysatoren kommen für diese Anwendung insbesondere aus CuO, ZnO und Al₂O₃ aufgebaute Teilchen in Betracht. Oft wird Katalysatorsplitt eingesetzt, der durch Zerkleinern von Katalysatortabletten erhalten wird. Durch den Einsatz von Katalysatorsplitt kann eine hohe Schüttdichte erreicht werden, jedoch ist die mechanische Stabilität des Katalysatormaterials beeinträchtigt, so daß es beim Betrieb zu Abrieb und Pulverisierung und damit zum mechanischen Abbau des Katalysators kommt. Zudem tritt an Schüttungen aus unregelmäßig geformten Splittpartikeln ein wesentlich höherer Druckverlust auf als bei Schüttungen aus regelmäßig geformten Tabletten.

In EP-A-0 152 314 ist derartiger Katalysatorsplitt mit einem Teilchendurchmesser von weniger als 0,5 mm beschrieben.

US 5,112,591 betrifft Katalysatoren auf Basis von Kupferoxid, Aluminiumoxid und Zinkoxid, die für die Methanolsynthese verwendet werden. In den Beispielen werden zylindrische Katalysatoren mit einem Durchmesser von 2,4 mm und einer Höhe von 2 mm genannt, siehe die Beispiele. Eine Wasserdampfreformierung von methanol ist in Beispiel 13 erwähnt.

Aufgabe der vorliegenden Erfindung ist die Bereitstellung von Katalysatorteilchen, die eine hohe Schüttdichte erlauben und gleichzeitig eine große mechanische Stabilität aufweisen. Die Katalysatoren sollen insbesondere zur Wasserdampfreformierung von Methanol verwendbar sein.

Die Aufgabe wird erfindungsgemäß gelöst durch einen Katalysator in Tablettenform der, abgesehen von Binde-, Gleit- und anderen Verarbeitungshilfsmitteln, im wesentlichen aus CuO, ZnO und Al₂O₃ aufgebaut ist, mit einem Maximaldurchmesser im Bereich von 1,0 bis 1,8 mm und einer Maximalhöhe im Bereich von 0,8 bis 1,8 mm, wobei der Minimaldurchmesser 0,8 mm und die Maximalhöhe 0,5 mm betragen. Derartige Katalysatortabletten weisen hervorragende mechanische Eigenschaften auf und sind selbst bei hoher Beanspruchung über lange Zeit mechanisch stabil, ohne zu zerfallen. Damit sind sie insbesondere für Anwendungen geeignet, bei denen es auf eine hohe Schüttdichte des Katalysators ankommt, beispielsweise in mobilen Anwendungen. Aufgrund der hohen mechanischen Stabilität können die Katalysatoren hohen mechanischen Belastungen ausgesetzt werden.

Unter dem Begriff "Katalysator" werden vorliegend auch Katalysatorträger verstanden, auf die vor dem Einsatz noch katalytisch aktive Substanzen aufgebracht werden müssen (beispielsweise durch Tränkung). Dabei kann es sich beispielsweise um das Aufbringen von Metallen oder Metalloxiden, wie auch Metallsalzen oder anderen Metallverbindungen handeln. Vorzugsweise kann der tablettierte Katalysator jedoch direkt in der Katalyse eingesetzt werden. Der Ausdruck "Maximaldurchmesser" beschreibt bei einem tablettierten Katalysator, der nicht zylindrisch ist, den Durchmesser, bei dem die beiden entsprechenden Umfangspunkte den maximalen Abstand vom Mittelpunkt haben. Bei einer Ellipsenform ist dies zum Beispiel der größere der beiden Durchmesser. Bei einer Zylinderform der Tabletten (d.h. kreisförmigem Durchschnitt) liegt nur ein Durchmesser vor, der somit dem Maximaldurchmesser entspricht. Gleiches gilt für den Begriff "Maximalhöhe". Er bezeichnet bei einer Tablette mit unregelmäßiger Oberfläche die maximale Höhe in dieser unregelmäßigen Form. Bei einer zylindrischen Tablette entspricht die Maximalhöhe gerade der Höhe des Zylinders. Die Höhe der Tablette wird entlang der Komprimierungsrichtung bei der Tablettenherstellung gemessen. Der Durchmesser wird in der dazu senkrechten Ebene bestimmt.

Die Tabletten können jede geeignete Form aufweisen. In der Regel sind sie zylinderförmig oder zeigen in der vorstehend bezeichneten Ebene eine Ellipsenform. Vorzugsweise weisen die Tabletten eine zylindrische Form auf. Beispielsweise können die Tabletten auch Kalottenform aufweisen. Andere Tablettenformen sind kreisrunde oder ovale Scheiben (Plätzchen, Pastillen), Täfelchen oder Kugeln, wie auch Kugelabschnitte.

Vorzugsweise weisen die erfindungsgemäßen Tabletten einen minimalen Durchmesser von 1,0 mm und eine minimale Höhe von 0,8 mm auf. Vorzugsweise beträgt der Maximaldurchmesser maximal 1,5 mm und die Maximalhöhe beträgt maximal 1,5 mm.

Das Gewicht einer Tablette hängt vom verwendeten Material und dem Verdichtungsgrad ab. Vorzugsweise beträgt das Gewicht einer Tablette 2 bis 20 mg, besonders bevorzugt 4 bis 10 mg.

Der Katalysator ist, abgesehen von Binde-, Gleit- und anderen Verarbeitungshilfsmitteln, im wesentlichen aus CuO, ZnO und Al₂O₃ aufgebaut, beispielsweise aus etwa 67 Gew.-% CuO, 26,4 Gew.-% ZnO und 6,6 Gew.-% Al₂O₃.

Die Metalloxide können dabei durch jedes geeignete Herstellungsverfahren erhalten werden, beispielsweise durch Fällen von gelösten Metallverbindungen und Trocknen sowie Calcinieren der Fällungsprodukte.

Bei den erfindungsgemäßen Tabletten handelt es sich vorzugsweise um Volltabletten.

Die Erfindung betrifft auch ein Verfahren zur Herstellung dieser Tabletten durch Tablettieren eines Pulvers oder eines Granulats des entsprechenden Katalysatormaterials.

Vorzugsweise wird zum Tablettieren vorkompaktiertes Material mit einer durchschnittlichen Teilchengröße von 0,01 bis 1,0 mm, besonders bevorzugt 0,05 bis 0,6 mm eingesetzt. Vorteilhaft können auch vorkompaktierte Teilchen oder Granulate mit einem Anteil von allgemein 0,1 bis 50 Gew-% , bevorzugt 5 bis 50 Gew.-%, vorzugsweise 10 bis 40 Gew.-% mit einer durchschnittlichen Teilchengröße im Bereich von 0,01 bis 0,4 mm, vorzugsweise 0,05 bis 0,3 mm und mit einem Anteil von allgemein 20 bis 95 Gew-%, bevorzugt 50 bis 95 Gew.-%, vorzugsweise 60 bis 90 Gew.-% mit einer durchschnittlichen Teilchengröße im Bereich von 0,2 bis 1,0 mm, vorzugsweise 0,3 bis 0,8 mm eingesetzt werden.

Allgemein sollte die Teilchengröße so gewählt werden, daß das Pulver oder Granulat gut dosierbar ist und die Teilchengröße deutlich unterhalb der Dimensionen der herzustellenden Tablette liegen. Vorzugsweise sollten die eingesetzten Teilchen einen mittleren Teilchendurchmesser aufweisen, der maximal 50 % des Maximaldurchmessers beziehungsweise der Maximalhöhe entspricht.

Die Herstellung der Tabletten kann beispielsweise in bekannten Tablettiermaschinen in Exzenter- oder Rundlaufpressen erfolgen. Dabei müssen die Tablettierwerkzeuge für die geforderte Tablettengröße ausgelegt werden.

Die erfindungsgemäßen Tabletten zeigen gegenüber den bekannten Großtabletten ein wesentlich besseres Packungsverhalten und gegenüber dem bekannten Katalysatorsplitt wesentlich verbesserte mechanische Eigenschaften (Härte, Abrieb, Staubaustrag) und verminderten Druckverlust bei gleicher oder ähnlicher Schüttdichte. Die erfindungsgemäßen Katalysatoren weisen bei gleicher Aktivmasse vorzugsweise mindestens die gleiche Anfangsaktivität, bezogen auf das Volumen, wie Splittfraktionen aus gleichem Material auf.

Katalysatoren in Tablettenform mit den erfindungsgemäßen geringen Abmessungen können in einer Vielzahl von Anwendungen eingesetzt werden. Beispiele sind neben der Methanolreformierung die Hydrierung von Estern, Carbonsäuren, Aldehyden, Ketonen oder Nitrilen, die Reformierung von Kohlenwasserstoffen (insbesondere bei mobilen Anwendungen) und die Konvertierung von CO mit Wasserdampf, (insbesondere bei mobilen Anwendungen). Allgemein werden die erfindungsgemäßen Katalysatoren in Tablettenform besonders vorteilhaft bei Stofftransport-limitierten Reaktionen eingesetzt.

Manche Katalysatoren werden vor dem Einsatz unter reduzierenden Bedingungen behandelt, wobei zumindest ein Teil der Metalloxide in Metalle umgewandelt wird. Beispielsweise wird beim Einsatz des Katalysators aus CuO, ZnO und Al₂O₃ in einem Methanolreformierungsreaktor das Kupferoxid im Katalysator zumindest teilweise in metallisches Kupfer umgewandelt. Die Härtevorteile der Katalysatorkleintabletten im Vergleich zu Splitt sind im reduzierten oder teilweise reduzierten Zustand besonders ausgeprägt.

Die Erfindung wird nachstehend anhand von Beispielen näher erläutert.

### Beispiel 1:

### Herstellung von Tabletten mit 1,5 mm Durchmesser und 1,5 mm Höhe aus Cu-Zn-Al-Oxid-Aktivmasse

Ausgangsmaterial für die Herstellung von Tabletten mit 1,5 mm Durchmesser und 1,5 mm Höhe war eine Aktivmasse der Zusammensetzung 67 Gew.-% CuO, 26,4 Gew.-% ZnO, 6,6 Gew.-% Al₂O₃, die durch Fällung der Komponenten, Waschen des Fällproduktes (Natrium- und Nitrat-frei), Sprühtrocknen und Calcinieren des Produktes bei 400°C erhalten worden war. Dieses pulverförmige Ausgangsmaterial wurde kompaktiert und anschließend mittels eines Laborwalzenstuhls (Typ: Bauermeister LRC 250) wieder zerkleinert. Aus dem erhaltenen Mahlgut wurde mittels einer Vibrationstaumelsiebmaschine die Fraktion von 0.3 mm - 0.63 mm Teilchengröße abgesiebt. Zusätzlich wurde die Siebfraktion kleiner 0.3 mm abgetrennt.

Zur Tablettierung wurde ein Rundläufer von Kilian (Typ: LX 18) eingesetzt. Die Tablettiermischung bestand aus den auf dem oben beschriebenen Weg hergestellten Siebfraktionen, wobei 75 Gew-% Granulat der Fraktion mit einer Teilchengröße von 0,03 bis 0,3 mm und 25 Gew-% Granulat der Fraktion mit einer Teilchengröße kleiner 0,3 mm eingesetzt wurden. Zu dieser Produktmischung wurden 2 Gew.-% Graphit gegeben, und das Material wurde in einem Lödige-Mischer 2 min. durchmischt. Das resultierende Produkt war der Ausgangsstoff für die Tablettierung.

Die Tablettierung erfolgte mit folgenden Einstellungen:

| | |
|---|---|
| Füllhöhe | 1,8 - 2,0 mm; |
| Eingebaute Niederzugsschiene | 0 - 4,5 mm; |
| Vordruck | 0,5 kN; |
| Preßdruck | 10,4 kN (maximaler Wert); |
| Rotordrehzahl | 34 U/min; |
| Geschwindigkeit des Rundläufers | 0,479 m/sec. |

Eingesetzt wurde ein speziell für diese Tablettierung gefertigtes Tablettierwerkzeug, bestehend aus einer Matrize mit 9 Bohrungen (Durchmesser der Bohrungen 1,5 mm), einer Lochplatte für den Unterstempelschaft, einer Lochplatte für den Oberstempelschaft sowie jeweils 9 oberen und unteren Einsatzstempeln. Die Tablettiermaschine wurde mit 6 Werkzeugen (jeweils bestehend aus 1 Matrize, 2 x Lochplatte, 9 Oberstempel, 9 Unterstempel) bestückt und die Tablettierung mit den oben beschriebenen Einstellungen durchgeführt. Bei der Tablettierung wurde im Mittel eine Ausstoßkraft von 0.7 kN für die Kleintabletten gemessen.

Es ergeben sich Tabletten mit einem Durchmesser von 1,5 mm und einer Höhe von 1,5 mm. Die Tabletten weisen eine BET-Oberfläche von 60 m²/g und ein mittleres Porenvolumen von 0,15 ml/g auf. Die Seitendruckfestigkeit der Tabletten im oxidischen Zustand beträgt 24,3 N/Tablette (Standardabweichung: 9,2 N/Tab.; bestimmt mit einem Härtemeßgerät von Frank an 20 Tabletten), die Stirndruckfestigkeit liegt bei 979 N/cm² (Standardabweichung: 312 N/cm²; Bestimmung auf gleichem Gerät). Das Schüttgewicht der Tabletten liegt bei 1,654 kg/l.

### Beispiel 2:

### Herstellung von Tabletten mit 1,5 mm Durchmesser und 1,25 mm Höhe aus Cu-Zn-Al-Oxid-Aktivmasse

Der Ausgangsstoff für die Tablettierung wurde wie in Beispiel 1 beschrieben hergestellt.

Die Tablettierung erfolgte mit folgenden Einstellungen:

| | |
|---|---|
| Füllhöhe | 1,6 mm; |
| Eingebaute Niederzugsschiene | 0 - 4,5 mm; |
| Vordruck | 0,5 kN; |
| Preßdruck | 10,5 kN (maximaler Wert); |
| Rotordrehzahl | 34 u/min; |
| Geschwindigkeit des Rundläufers | 0,479 m/sec. |

Eingesetzt wurde ein speziell für diese Tablettierung gefertigtes Tablettierwerkzeug, bestehend aus einer Matritze mit 9 Bohrungen (Durchmesser der Bohrungen 1,5 mm), einer Lochplatte für den Unterstempelschaft, einer Lochplatte für den Oberstempelschaft sowie jeweils 9 oberen und unteren Einsatzstempeln. Die Tablettiermaschine wurde mit 6 Werkzeugen (jeweils bestehend aus 1 Matritze, 2x Lochplatte, 9 Oberstempel, 9 Unterstempel) bestückt und die Tablettierung mit den oben beschriebenen Einstellungen durchgeführt. Bei der Tablettierung wurde im Mittel eine Ausstoßkraft von 0,75 kN für die Kleintabletten gemessen.

Es ergeben sich Tabletten mit einem Durchmesser von 1,5 mm und einer Höhe von 1,25 mm. Die Tabletten weisen eine BET-Oberfläche von 60 m²/g und ein mittleres Porenvolumen von 0,13 ml/g auf. Die Seitendruckfestigkeit der Tabletten im oxidischen Zustand beträgt 23,7 N/Tablette (bestimmt mit einem Härtemeßgerät von Frank an 20 Tabletten). Das Schüttgewicht der Tabletten liegt bei 1,83 kg/l.

### Katalysatortest

Der Test des Katalysators aus Beispiel 1 erfolgte in einem Differentialkreislauftestreaktor. In den Testreaktor wurden 10 ml des tablettierten Katalysators verdünnt in 40 ml Inertmaterial (Steatitkugeln) eingesetzt (Abmessungen des Katalysatorbettes (mit Inertmaterial): Höhe ca. 18 mm; Durchmesser ca. 60 mm). Der Katalysator wurde mit Wasserstoffgas (1 % H₂ in N₂) bei 200°C reduziert. Anschließend wurde der Katalysator mit Wasserdampf/Methanol-Gemisch (250 ml/h Gemisch; Molverhältnis: 1,5 Mol H₂O : 1 Mol MeOH) beaufschlagt (Druck: 3 bar absolut). Das Wasserdampf/Methanol-Gemisch wurde in einem Vorverdampfer verdampft und anschließend über den Katalysator geleitet. Der Katalysatortest wurde bei einer Reaktortemperatur von 280°C über eine Zeit von 4 Stunden durchgeführt. Anschließend wurde die Zufuhr des Wasser/Methanol-Eduktgemisches abgestellt, der Reaktor 30 Minuten mit Stickstoff gespült und anschließend die Reaktorheizung abgestellt. Nach Abkühlen des Reaktors auf Raumtemperatur wurden 2 Volumenprozent Luft zu dem Stickstoffstrom gegeben. Nach 30 Minuten wurde der Stickstoffstrom abgestellt und unverdünnte Luft 30 Minuten über den Katalysator geleitet. Anschließend wurde der Katalysator dem Reaktor entnommen und die Seitendruckfestigkeit der Tabletten ermittelt. Nach dieser Behandlung wies der Katalysator noch eine sehr gute Seitendruckfestigkeit von 7,5 N/Tab. (Standardabweichung: 2,1 N/Tab) auf. Keine der getesteten Tabletten wies sichtbare Beschädigungen auf, keine der Tabletten war zerfallen.

## Patentansprüche

1. Katalysator in Tablettenform, der, abgesehen von Binde-, Gleit- und anderen Verarbeitungshilfsmitteln, im wesentlichen aus CuO, ZnO und Al₂O₃ aufgebaut ist, mit einem Maximaldurchmesser im Bereich von 1,0 bis 1,8 mm und einer Maximalhöhe im Bereich von 0,8 bis 1,8 mm, wobei der Minimaldurchmesser 0,8 mm und die Minimalhöhe 0,5 mm betragen.

2. Katalysator nach Anspruch 1, **dadurch gekennzeichnet, daß** der Maximaldurchmesser 1,5 mm und die Maximalhöhe 1,5 mm betragen.

3. Katalysator nach Anspruch 1 oder 2, **dadurch gekennzeichnet, daß** er weitgehend zylinderförmig ist.

4. Katalysator nach einem der Ansprüche 1 bis 3, **dadurch gekennzeichnet, daß** das Gewicht einer Tablette 2 bis 20 mg beträgt.

5. Katalysator nach Anspruch 4, **dadurch gekennzeichnet, daß** das Gewicht einer Tablette 4 bis 10 mg beträgt.

6. Verfahren zur Herstellung eines Katalysators nach einem der Ansprüche 1 bis 5 durch Tablettieren eines Pulvers oder eines Granulats des entsprechenden Katalysatormaterials.

7. Verfahren nach Anspruch 6, **dadurch gekennzeichnet, daß** ein Granulat mit einem Anteil von 0,1 bis 50 Gew.-% mit einer durchschnittlichen Teilchengröße im Bereich von 0,01 bis 0,4 mm und mit einem Anteil von 20 bis 95 Gew.-% mit einer durchschnittlichen Teilchengröße im Bereich von 0,2 bis 1,0 mm eingesetzt wird.

8. Verfahren nach Anspruch 6 oder 7, **dadurch gekennzeichnet, daß** zur Herstellung der Tabletten Exzenter- oder Rundlaufpressen eingesetzt werden.

9. Verwendung eines Katalysators in Tablettenform, wie er in einem der Ansprüche 1 bis 5 definiert ist, zur Wasserdampfreformierung von Methanol.

## Claims

1. A catalyst in tablet form which, in addition to binders, lubricants and other processing aids, is substantially made up of CuO, ZnO and Al₂O₃, having a maximum diameter in the range from 1.0 to 1.8 mm and a maximum height in the range from 0.8 mm to 1.8, the minimum diameter being 0.8 mm and the minimum height being 0.5 mm.

2. A catalyst as claimed in claim 1, wherein the maximum diameter is 1.5 mm and the maximum height is 1.5 mm.

3. A catalyst as claimed in claim 1 or 2, wherein it is substantially cylindrical.

4. A catalyst as claimed in one of claims 1 to 3, wherein the weight of one tablet is from 2 to 20 mg.

5. A catalyst as claimed in claim 4, wherein the weight of one tablet is from 4 to 10 mg.

6. A process for producing a catalyst as claimed in one of claims 1 to 5 by tableting a powder or granules of the corresponding catalyst material.

7. A process as claimed in claim 6, wherein use is made of granules having a content of from 0.1 to 50% by weight of a mean particle size of from 0.01 to 0.4 mm and having a content of from 20 to 95% by weight of a mean particle size of from 0.2 to 1.0 mm.

8. A process as claimed in claim 6 or 7, wherein eccentric or rotary tableting presses are used to produce the tablets.

9. The use of a catalyst in tablet form as defined in one of claims 1 to 5 for the steam reformation of methanol.

## Revendications

1. Catalyseur sous forme de pastille, qui, à l'exception d'agents liants, d'agents de glissement et d'autres adjuvants de traitement, constitués essentiellement de CuO, ZnO et Al₂O₃, avec un diamètre maximal dans la plage de 1,0 à 1,8 mm, et une hauteur maximale dans la plage de 0,8 à 1,8 mm, le diamètre minimal étant de 0,8 mm et la hauteur minimale de 0,5 mm.

2. Catalyseur selon la revendication 1, **caractérisé en ce que** le diamètre maximal est de 1,5 mm et la hauteur maximale est de 1,5 mm.

3. Catalyseur selon la revendication 1 ou 2, **caractérisé en ce qu'**il est en grande partie de forme cylindrique.

4. Catalyseur selon l'une quelconque des revendications 1 à 3, **caractérisé en ce que** le poids d'une pastille est de 2 à 20 mg.

5. Catalyseur selon la revendication 4, **caractérisé en ce que** le poids d'une pastille est de 4 à 10 mg.

6. Procédé de préparation d'un catalyseur selon l'une quelconque des revendications 1 à 5, par pastillage d'une poudre ou d'un granulé de la matière de catalyseur appropriée.

7. Procédé selon la revendication 6, **caractérisé en ce qu'**un granulat ayant une proportion de 0,1 à 50% en poids avec une granulométrie moyenne dans la plage de 0,01 à 0,4 mm et une proportion de 20 à 95% en poids avec une granulométrie moyenne dans la plage de 0,2 à 1,0 mm, est mis en oeuvre.

8. Procédé selon la revendication 6 ou 7, **caractérisé en ce que** des presses à excentrique ou des presses à plateau tournant sont mises en oeuvres pour préparer les pastilles.

9. Utilisation d'un catalyseur sous forme de pastille, tel qu'il est défini selon l'une quelconque des revendications 1 à 5, pour le vaporeformage du méthanol.
